# EUROPEAN PATENT APPLICATION

(11) **EP 4 625 224 A1**
(43) Date of publication of application: **01.10.2025**
(21) Application number: 25165724.3
(22) Date of filing: 24.03.2025
(51) Int. Cl.: G06F 21/55

(54) **DETECTION OF SHORT RESETS OF AN ELECTRONIC DEVICE**

(30) Priority: 28.03.2024 US 202418620757
(71) Applicant: Altera Corporation, San Jose, CA 95134 (US)
(72) Inventor: NEVE DE MEVERGNIES, Michael, 56520 Guidel (FR)
(74) Representative: 2SPL Patentanwälte PartG mbB

(57) **Abstract**

Anti-tamper systems and methods for protecting integrated circuit devices are provided. An integrated circuit device making use of an anti-tamper system may include memory and a device manager. The memory may store a count of resets of the integrated circuit device having a duration less than a threshold reset duration. The device manager may perform an anti-tamper operation when the count of resets exceeds a threshold number of resets.

## Description

### BACKGROUND

This disclosure relates generally to integrated circuit (IC) devices such as processors, application specific integrated circuits (ASICs), and programmable logic devices (PLDs) that detect frequent short power-on-resets.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

Integrated circuits are ubiquitous in modern electronics and manufacturers have developed ways to prevent tampering. Anti-tamper strategies typically rely on sensors to detect abnormal conditions that induce faults to veer off of normal execution. Environmental sensors are historically used to monitor clocks, voltage, and temperature. Facing adversaries with increasing levels of sophistication, the sensitivity of sensors is improved generation over generation, leading to increased complexity, area, and power. Moreover, the sensors are instantiated in hardware, even though some customer markets might not activate the anti-tamper capabilities.

### BRIEF DESCRIPTION OF THE DRAWINGS

Various aspects of this disclosure may be better understood upon reading the following detailed description and upon reference to the drawings in which:
FIG. 1 illustrates a block diagram of a system to configure an integrated circuit that uses anti-tamper measures to detect and react to excessive short resets;
FIG. 2 illustrates an example of the integrated circuit device as a programmable logic device, such as a field-programmable gate array (FPGA);
FIG. 3 is a block diagram of components of the integrated circuit that perform anti-tamper operations;
FIG. 4 is a flowchart of a method for performing the anti-tamper operations using the integrated circuit; and

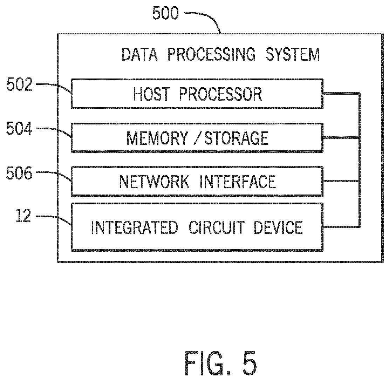

FIG. 5 is a block diagram of a data processing system incorporating the integrated circuit.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

This disclosure relates to anti-tamper measures for an integrated circuit. An adversary attempting to gain access to secrets of an integrated circuit or disturb its normal execution flow may frequently perform power-on-resets of the integrated circuit to calibrate her/his attack. The solution detailed here implements a firmware defense aimed a detecting the device being set up or profiled for attack. Physical adversaries typically require a multitude of trials and errors to find an attack recipe against a specific design. The solution presented here is to detect when the integrated circuit is being subjected to frequent short reset cycles, which is not typical from normal operation mode (i.e., full and frequent resets are rare events). Moreover, this detection mechanism is based on firmware, and therefore does not involve significant additional hardware such as additional environmental sensors. The firmware design may also be small in size and have relatively little complexity.

In some integrated circuit devices, battery-backed memory may store an owner key that allows for authentication and/or decryption of data supplied to the integrated circuit. For example, a programmable logic device may receive encrypted configuration data that is authenticated and/or decrypted using a key from the battery-backed memory. The configuration data, when programmed into the configuration memory of the programmable logic device, causes the programmable logic to implement a circuit design. The battery-backed memory may also maintain a count of recent short-duration power-on-resets. Once startup firmware detects that this short reset count exceeds a threshold, however, the firmware may take action to disrupt the reset process. For example, the firmware may wipe the contents of the battery-backed memory or may introduce an exponentially increasing delay based on the short reset count. If the adversary disconnects the battery from the battery-backed memory, the contents of the battery-backed memory (e.g., the owner key) may be lost, rendering the attack pointless.

While this disclosure describes anti-tamper measures using a programmable logic device by way of example, the systems and methods of this disclosure may be used to protect any suitable integrated circuit, such as a processor or application-specific integrated circuit (ASIC), that has memory appropriate to maintain a count of short-duration resets (e.g., battery-backed memory, non-volatile memory).

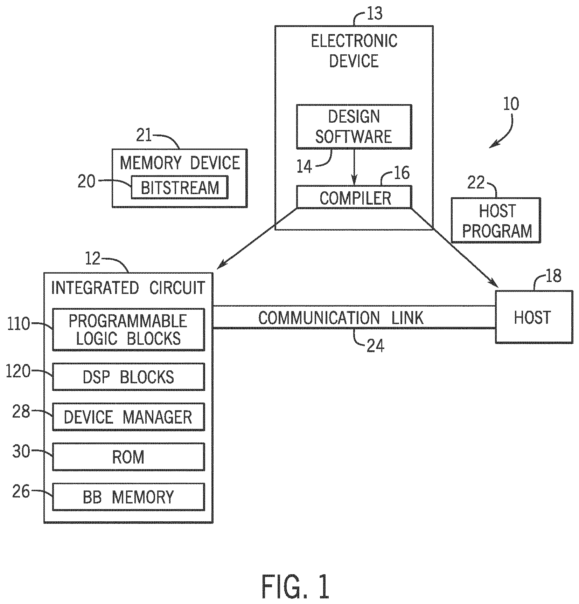

FIG. 1 illustrates a block diagram of one example of a system 10 that may include anti-tamper measures to take action when too many short-duration resets have occurred. A designer may desire to implement a system on the integrated circuit device 12 (e.g., a programmable logic device such as a field-programmable gate array (FPGA), an application-specific integrated circuit (ASIC) that includes programmable logic circuitry, or an application-specific integrated circuit (ASIC) that is to be fabricated). The integrated circuit device 12 may include a single integrated circuit, multiple integrated circuits in a package (e.g., a multi-chip module (MCM), a system-in-package (SiP)), or multiple integrated circuits in multiple packages communicating remotely (e.g., via wires or traces). In some cases, the designer may specify a high-level program to be implemented, such as an OPENCL^{®} program that may enable the designer to more efficiently and easily provide programming instructions to configure a set of programmable logic cells for the integrated circuit device 12 without specific knowledge of low-level hardware description languages (e.g., Verilog, very high speed integrated circuit hardware description language (VHDL)). For example, since OPENCL^{®} is quite similar to other high-level programming languages, such as C++, designers of programmable logic familiar with such programming languages may have a reduced learning curve than designers that are required to learn unfamiliar low-level hardware description languages to implement new functionalities in the integrated circuit device 12.

In a configuration mode of the integrated circuit device 12 or in a design phase of the integrated circuit device 12, a designer may use an electronic device 13 (e.g., a computer) to implement high-level designs (e.g., a system user design) using design software 14, such as a version of INTEL^{®} QUARTUS^{®} by INTEL CORPORATION. Additionally or alternatively, the electronic device 13 may use the design software 14 and a compiler 16 to convert a high-level program into a lower-level description (e.g., a configuration program, a bitstream). The compiler 16 may provide machine-readable instructions representative of the high-level program to a host 18 and to the integrated circuit device 12. For the integrated circuit device 12, a bitstream 20 may be stored onto a memory device 21 accessible to the integrated circuit device 12. The host 18 may receive a host program 22 that may be implemented by or interact with a circuit design implemented by the bitstream 20. To implement the host program 22, the host 18 may communicate instructions from the host program 22 to the integrated circuit device 12 via a communications link 24 that may be, for example, direct memory access (DMA) communications or peripheral component interconnect express (PCIe) communications.

In some embodiments, the bitstream 20 may configure programmable logic blocks 110 and digital signal processing (DSP) blocks 120 on the integrated circuit device 12. The programmable logic blocks 110 may include circuitry and/or other logic elements and may be configurable to implement a variety of functions, some of which may be in combination with digital signal processing (DSP) blocks 120.

The bitstream 20 may be encrypted and/or signed based on an owner key stored in battery-backed (BB) memory 26. A device manager 28, representing any suitable state machine or microprocessor, may decrypt and/or authenticate the bitstream 20 based on the owner key stored in the BB memory 26 according to instructions stored on a read-only-memory (ROM) 30 and/or configuration stored in fuses. The device manager 28 may also perform other startup tasks, such as programming the bitstream into the integrated circuit device 12 to implement a circuit design. As also discussed in this disclosure, the device manager 28 may carry out anti-tamper measures, including maintaining a count of short-duration resets and taking action to disrupt the short resets when the count exceeds a threshold.

The designer may also use the design software 14 to generate and/or to specify a low-level program, such as the low-level hardware description languages described above. Further, in some embodiments, the system 10 may be implemented without a separate host program 22. Thus, embodiments described herein are intended to be illustrative and not limiting.

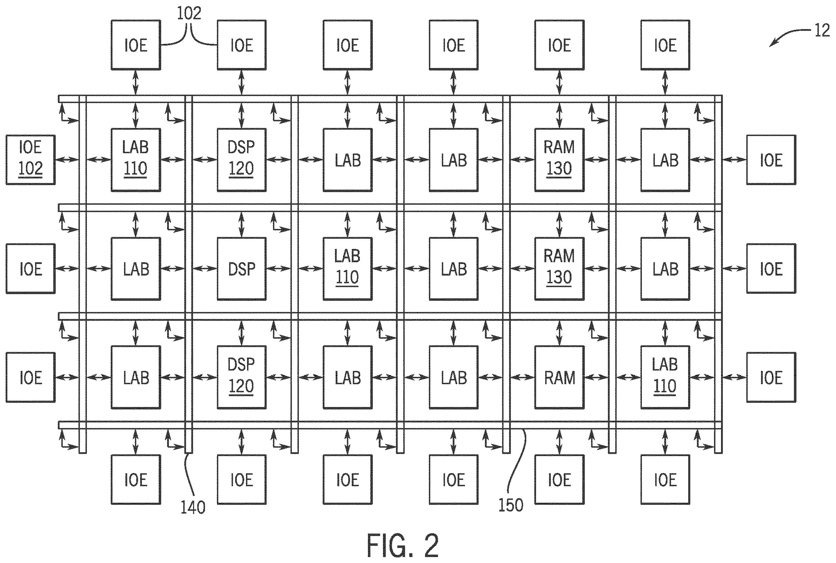

An illustrative example of a programmable integrated circuit device 12 such as a programmable logic device (PLD) that may be configured to implement a circuit design is shown in FIG. 2. As shown in FIG. 2, the integrated circuit device 12 (e.g., a field-programmable gate array integrated circuit die) may include a two-dimensional array of functional blocks, including programmable logic blocks 110 (also referred to as logic array blocks (LABs) or configurable logic blocks (CLBs)) and other functional blocks, such as random-access memory (RAM) blocks 130 and digital signal processing (DSP) blocks 120, for example. Functional blocks such as LABs 110 may include smaller programmable regions (e.g., logic elements, configurable logic blocks, or adaptive logic modules) that receive input signals and perform custom functions on the input signals to produce output signals. LABs 110 may also be grouped into larger programmable regions sometimes referred to as logic sectors that are individually managed and configured by corresponding logic sector managers. The grouping of the programmable logic resources on the integrated circuit device 12 into logic sectors, logic array blocks, logic elements, or adaptive logic modules is merely illustrative. In general, the integrated circuit device 12 may include functional logic blocks of any suitable size and type, which may be organized in accordance with any suitable logic resource hierarchy.

Programmable logic circuitry of the integrated circuit device 12 may include programmable memory elements, which are sometimes referred to as configuration random access memory (CRAM). The memory elements may be loaded with configuration data (also called programming data or configuration bitstream) using input-output (IO) pins 102. Once loaded, the memory elements each provide a corresponding static control signal that controls the operation of an associated functional block (e.g., LABs 110, DSP 120, RAM 130, or input-output elements 102).

In one scenario, the outputs of the loaded memory elements are applied to the gates of metal-oxide-semiconductor transistors in a functional block to turn certain transistors on or off and thereby configure the logic in the functional block including the routing paths. Programmable logic circuit elements that may be controlled in this way include parts of multiplexers (e.g., multiplexers used for forming routing paths in interconnect circuits), look-up tables, logic arrays, AND, OR, NAND, and NOR logic gates, pass gates, etc.

The memory elements may use any suitable volatile and/or non-volatile memory structures such as random-access-memory (RAM) cells, fuses, antifuses, programmable read-only-memory memory cells, mask-programmed and laser-programmed structures, combinations of these structures, etc. Because the memory elements are loaded with configuration data during programming, the memory elements are sometimes referred to as configuration memory, configuration random-access memory (CRAM), or programmable memory elements. Programmable logic device (PLD) 100 may be configured to implement a custom circuit design. For example, the configuration RAM may be programmed such that LABs 110, DSP 120, and RAM 130, programmable interconnect circuitry (i.e., vertical channels 140 and horizontal channels 150), and the input-output elements 102 form the circuit design implementation.

The integrated circuit device 12 may also include programmable interconnect circuitry in the form of vertical routing channels 140 (i.e., interconnects formed along a vertical axis of the integrated circuit 100) and horizontal routing channels 150 (i.e., interconnects formed along a horizontal axis of the integrated circuit 100), each routing channel including at least one track to route at least one wire. If desired, the interconnect circuitry may include pipeline elements, and the contents stored in these pipeline elements may be accessed during operation. For example, a programming circuit may provide read and write access to a pipeline element.

Note that routing topologies other than the topology of the interconnect circuitry depicted in FIG. 1 may be used. For example, the routing topology may include wires that travel diagonally or that travel horizontally and vertically along different parts of their extent as well as wires that are perpendicular to the device plane in the case of three-dimensional integrated circuits, and the driver of a wire may be located at a different point than one end of a wire. The routing topology may include global wires that span substantially all of the integrated circuit device 12, fractional global wires such as wires that span part of the integrated circuit device 12, staggered wires of a particular length, smaller local wires, or any other suitable interconnection resource arrangement.

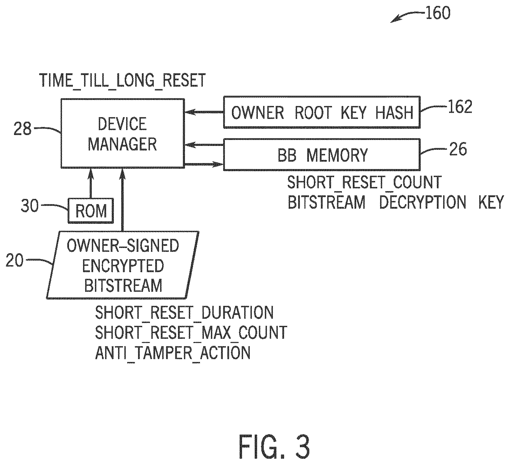

FIG. 3 is a block diagram of components of an anti-tamper system 160 that may be carried out using a device manager 28 of an integrated circuit (e.g., the integrated circuit device 12 shown in FIG. 1, an ASIC, a component of a graphics processing unit (GPU), a component of a central processing unit (CPU), a processor). The device manager 28 may represent any suitable circuitry, such as a state machine or a microprocessor that runs instructions from a memory device, such as a read-only-memory (ROM) (e.g., the ROM 30). To ensure a trusted clock reference is available for the device manager 28, an internal ring-oscillator may be used. When the device manager 28 includes a processor, the processor of the device manager 28 may be any suitable type of processor capable of executing processor-executable code (e.g., stored on the ROM 30). The ROM 30 may be any suitable article of manufacture that can serve as media to store processor-executable code, data, or the like. The ROM may represent non-transitory computer-readable media (e.g., any suitable form of memory or storage) that may store the processor-executable code used by the processor of the device manager 28 to manage the operation of the integrated circuit, including guiding the startup of the integrated circuit upon a power-on-reset (POR) and performing anti-tamper operations based on the detection of short-duration resets.

The anti-tamper system 160 provides additional tamper detection options to the owner of the integrated circuit device 12. As anti-tamper features are optionally enabled by the integrated circuit device 12 owner, this may protect the owner assets in devices in a SECURITY LOCKED security state (e.g., in devices that have been provisioned with the owner's root key for bitstream 20 authentication). This security feature will ensure that the adversary cannot simply disable the short reset detection feature. Moreover, because anti-tamper features are generally used by device owners with high security requirements, such a device owner would enable the storage of the bitstream encryption/decryption key in the BB memory 26. Therefore, this would not represent a significant limitation for security-focused device owners.

The anti-tamper system 160 carried out by the device manager 28 may be governed by a number of parameters that may be predefined by the manufacturer and stored in the ROM 30 or fuses, set by the owner of the integrated circuit device 12 (e.g., in the bitstream 20), and/or set by the owner or predefined by the manufacturer and stored in the BB memory 26. These parameters may include, among other things, a duration of time considered by the owner to be a short reset (SHORT_RESET_DURATION) (e.g., measured in processor cycles of the device manager 28 or time from a time/date system of the device manager 28); a threshold number of short resets before taking action to disrupt the reset process (SHORT_RESET_MAX_COUNT); and/or a specified anti-tamper action to disrupt the reset process when the threshold number of short resets has been reached (ANTI_TAMPER_ACTION). In the example of FIG. 3, these parameters are supplied by the owner of the integrated circuit through an owner-signed encrypted bitstream 20. In other examples, however, any of these parameters may be predefined by the manufacturer (e.g., stored in the ROM 30, the BB memory 26, and/or fuses).

Upon a power-on reset, the device manager 28 may read a counter stored in the BB memory 26 representing a total number of short resets that have accumulated (short_reset_count) and increment the short_reset_count counter by 1. The device manager 28 may also read a bitstream decryption key from the BB memory 26, which the device manager 28 uses to authenticate and/or decrypt the bitstream 20 and extract the anti-tamper parameters SHORT_RESET_DURATION, SHORT_RESET_MAX_COUNT, and/or ANTI_TAMPER_ACTION. If the short_reset_count is equal to or greater than the threshold SHORT_RESET_MAX_COUNT, the device manager 28 may take an anti-tamper action to disrupt the ongoing reset process (e.g., based on the defined ANTI_TAMPER_ACTION). For example, the ANTI_TAMPER_ACTION may specify that the device manager 28 is to wipe the BB memory 26 or execute a delay. The delay may be a fixed number of cycles of delay or may vary depending on the number short resets that is stored in the short_reset_count counter on the BB memory 26. For example, the delay may be exponentially larger as the number short resets that is stored in the short_reset_count counter increases.

Based on the SHORT_RESET_DURATION parameter, the device manager 28 may define a counter (time_till_long_reset) representing an amount of time (e.g., number of cycles, time/date system of the device manager 28) that would be considered a normal reset time. The short_reset_count counter may be decremented when the time_till_long_reset counter has been reached. Thus, at the next reset, the short_reset_count counter will not have counted the previous reset as a short reset because it exceeded the SHORT_RESET_DURATION parameter. At any point, the owner may supply a cryptographically signed token (e.g., via an owner root key hash 162) to override features of the anti-tamper measures. For example, the token may cause the device manager 28 to reset the short_reset_counter or change the parameters SHORT_RESET_DURATION, SHORT_RESET_MAX_COUNT, and/or ANTI_TAMPER_ACTION.

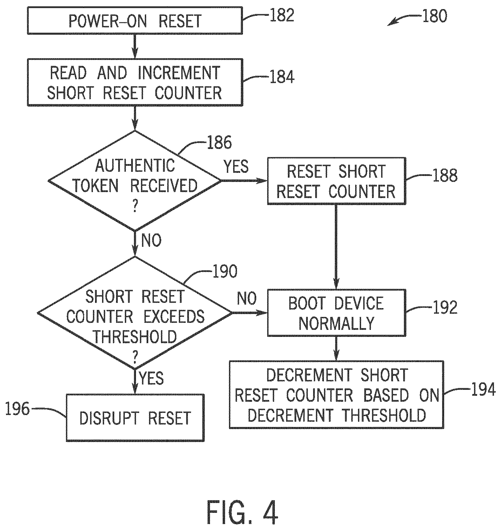

FIG. 4 is a flowchart 180 of a method for performing anti-tampering using the anti-tamper system 160. Upon a power-on reset (block 182), the device manager 28 (e.g., the firmware of the device manager) may read the short_reset_count value from the BB memory 26, increment it by 1, and store it back in place (block 184). If the owner of the device has provided an authentic token (decision block 186), this may override the anti-tamper system 160 and the short_reset_count counter may be reset (block 188). Note that the flowchart 180 illustrates the token being provided at this stage by way of example; in other examples, the token may be provided at any other suitable time during the operation of the integrated circuit device 12 (e.g., after the short_reset_count counter has been evaluated to perform anti-tamper measures, during normal runtime). Moreover, the anti-replay property of the token architecture (e.g., based on random nonce generated by the device manager 28) ensures that a given token (including, for example, a token stolen by the adversary) would be of little use to the adversary, as it would work only once.

Absent a token to override the anti-tamper system 160, the device manager 28 may detect whether the short_reset_count counter has exceeded a threshold number of short resets (decision block 190). If the value of the short_reset_count counter is smaller than the threshold SHORT_RESET_MAX_COUNT, the device manager 28 allows the integrated circuit 12 to boot normally (block 192) and resets the counter time_till_long_reset_to the SHORT_RESET_DURATION value. Based on this decrement threshold, a slow firmware loop will gradually decrement the time_till_long_reset_counter over time. When the time_till_long_reset counter reaches 0, the device manager 28 reads the value of the short_reset_count counter in the BB memory 26 and decrements it by one (unless it is already 0) and stores it back into the BB memory 26 (block 194).

Note that, if the integrated circuit device 12 is reset before the counter time_till_long_reset expires, the value of short_reset_count in the BB memory 26 will have already been incremented and saved, resulting in the integrated circuit device 12 being one step closer to the anti-tamper response. If the adversary removes the power to the BB memory 26, the value of the short_reset_count counter would be lost but the bitstream decryption key would as well. This would force the integrated circuit device 12 to be non-operational (and its secrets kept safe) until the part is re-provisioned by its legitimate owner (e.g., based on the owner root key). The owner can then investigate the causes that lead to the BB memory 26 being wiped.

If desired, the short_reset_count counter may be continued to be decremented (block 194) corresponding to another count of the time_till_long_reset counter. This would result in the short_reset_count counter eventually reaching a count of 0 after some extended period of time. In other examples, the short_reset_count counter may maintain a count of all short resets over the lifetime of the integrated circuit device 12 by only decrementing the short_reset_count counter once for each normal-duration power-on reset that occurs. This may be another parameter that may be set by the owner of the device in the encrypted configuration bitstream 20 of the integrated circuit device 12.

If the short_reset_count counter indicates that the number of short resets exceeds the threshold SHORT_RESET_MAX_COUNT (decision block 190), the device manager 28 may take an anti-tamper action to disrupt the reset process (block 196). In some cases, the bitstream 20 will indicate what response should be initiated (ANTI_TAMPER_ACTION). One response may be the wiping of the BB memory 26, while keeping a breadcrumb (e.g., a bit or set of bits to indicate that the wiping of the BB memory 26 was the result of an anti-tamper event). Another response may be a delay time before making the integrated circuit device 12 operational. For example, a variable boot penalty delay may be enforced before releasing the owner's assets in the device. The delay may be exponentially proportional to the value of the short_reset_count counter. In one specific example, after the third short reset, a boot time penalty of 5 minutes may be included; 30 minutes for the 4^{th}; 5 hours for the 5^{th}; and so on. This penalty would frustrate the adversary, making it impractical to use short resets in a probing attack. Indeed, in the case of side channel attacks, it is not uncommon for an adversary the capture of tens of thousands of traces in a controlled setup (i.e., from a repeatable setup, for example, after reset). If the boot time before capturing one trace is increased from tens of milliseconds to over 1 hour, the cost of the attack in terms of time spent capturing the traces would render such attacks impractical. The particular function of the delay may be defined in the configuration bitstream 20. Additionally or alternatively, the anti-tamper action may include wiping the BB memory 26 after some additional short-duration resets. For example, there may be a first threshold of short-duration resets to begin applying a delay (e.g., fixed delay and/or increasing delay) and a second threshold of short-duration resets to take more drastic action, such as to wipe the BB memory 26.

An integrated circuit including the anti-tamper system of this disclosure may be a component included in a data processing system, such as a data processing system 500, shown in FIG. 14. The data processing system 500 may include the integrated circuit system 12 (e.g., a programmable logic device, an ASIC, a processor), a host processor 502, memory and/or storage circuitry 504, or a network interface 506. The multiplier circuitry of this disclosure may be part of the integrated circuit system 12 (e.g., a programmable logic device), the host processor 502, the memory and/or storage circuitry 504, or the network interface 506, or another integrated circuit such as a graphics processing unit (GPU) or AI application specific integrated circuit (ASIC). The data processing system 500 may include more or fewer components (e.g., electronic display, user interface structures, application specific integrated circuits (ASICs)). The host processor 502 may include any processors that may manage a data processing request for the data processing system 500 (e.g., to perform encryption, decryption, machine learning, video processing, voice recognition, image recognition, data compression, database search ranking, bioinformatics, network security pattern identification, spatial navigation, cryptocurrency operations, or the like). The memory and/or storage circuitry 504 may include random access memory (RAM), read-only memory (ROM), one or more hard drives, flash memory, or the like. The memory and/or storage circuitry 504 may hold data to be processed by the data processing system 500. In some cases, the memory and/or storage circuitry 504 may also store configuration programs (e.g., bitstreams, mapping function) for programming the integrated circuit device 12. The network interface 506 may allow the data processing system 500 to communicate with other electronic devices. The data processing system 500 may include several different packages or may be contained within a single package on a single package substrate. For example, components of the data processing system 500 may be located on several different packages at one location (e.g., a data center) or multiple locations. For instance, components of the data processing system 500 may be located in separate geographic locations or areas, such as different cities, states, or countries.

The data processing system 500 may be part of a data center that processes a variety of different requests. For instance, the data processing system 500 may receive a data processing request via the network interface 506 to perform encryption, decryption, machine learning, video processing, voice recognition, image recognition, data compression, database search ranking, bioinformatics, network security pattern identification, spatial navigation, digital signal processing, or other specialized tasks.

While the embodiments set forth in the present disclosure may be susceptible to various modifications and alternative forms, specific embodiments have been shown by way of example in the drawings and have been described in detail herein. However, it should be understood that the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function] ..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

### Example Embodiments

EXAMPLE EMBODIMENT 1. An integrated circuit device comprising:
memory to store a count of resets of the integrated circuit device having a duration less than a threshold reset duration; and
a device manager to perform an anti-tamper operation when the count of resets exceeds a threshold number of resets.

EXAMPLE EMBODIMENT 2. The integrated circuit device of example embodiment 1, wherein the anti-tamper operation comprises erasing a decryption key from the memory.

EXAMPLE EMBODIMENT 3. The integrated circuit device of example embodiment 2, wherein the anti-tamper operation comprises storing an indication that the decryption key was erased due to excessive short-duration resets.

EXAMPLE EMBODIMENT 4. The integrated circuit device of example embodiment 1, wherein the anti-tamper operation comprises applying a delay to a startup time of the integrated circuit device.

EXAMPLE EMBODIMENT 5. The integrated circuit device of example embodiment 4, wherein the delay is based on the count of resets.

EXAMPLE EMBODIMENT 6. The integrated circuit device of example embodiment 5, wherein the delay increases exponentially based on the count of resets.

EXAMPLE EMBODIMENT 7. The integrated circuit device of example embodiment 1, wherein the device manager is to, upon reset of the integrated circuit device, increment the count of resets by 1 and, after the threshold reset duration has passed since the reset of the integrated circuit device, decrement the count of resets by 1.

EXAMPLE EMBODIMENT 8. The integrated circuit device of example embodiment 1, wherein the memory comprises a battery-backed memory to store the count of resets and store a decryption key.

EXAMPLE EMBODIMENT 9. The integrated circuit device of example embodiment 8, wherein the device manager is to receive encrypted data indicating the threshold number of resets and decrypt the encrypted data indicating the threshold number of resets using the decryption key stored in the memory.

EXAMPLE EMBODIMENT 10. The integrated circuit device of example embodiment 8, wherein the device manager is to receive encrypted data indicating the threshold reset duration, decrypt the encrypted data indicating the threshold reset duration, and maintain the count of resets in the memory based on the threshold reset duration.

EXAMPLE EMBODIMENT 11. The integrated circuit device of example embodiment 1, wherein the integrated circuit device comprises a programmable logic device.

EXAMPLE EMBODIMENT 12. An article of manufacture comprising one or more tangible, machine-readable media storing instructions that, when executed by a device manager of an integrated circuit device, cause the device manager to perform operations comprising:
upon a power-on reset, reading a count of short-duration resets of the integrated circuit device from a memory device indicating a number of times the integrated circuit device operated for less than a threshold reset duration after power-on resets; and
based on the count of short-duration resets exceeding a reset count threshold, performing an anti-tamper operation.

EXAMPLE EMBODIMENT 13. The article of manufacture of example embodiment 12, wherein the operations comprise:
incrementing the count of short-duration resets by 1 upon the power-on reset and storing the count of short-duration resets back in the memory; and
after an amount of time corresponding to the threshold reset duration has passed since the power-on reset, decrementing the count of short-duration resets by 1.

EXAMPLE EMBODIMENT 14. The article of manufacture of example embodiment 12, wherein the operations comprise:
reading a decryption key from the memory device; and
decrypting an encrypted bitstream using the decryption key to obtain:
   the threshold reset duration;
the reset count threshold; and
the anti-tamper operation.

EXAMPLE EMBODIMENT 15. The article of manufacture of example embodiment 12, wherein the operations comprise:
reading a decryption key from the memory device;
authenticating a token using the decryption key; and
based on the authentication of the token, bypassing the anti-tamper operation.

EXAMPLE EMBODIMENT 16. The article of manufacture of example embodiment 15, wherein bypassing the anti-tamper operation comprises resetting the count of short-duration resets.

EXAMPLE EMBODIMENT 17. A system comprising:
an integrated circuit comprising a device manager to perform an anti-tamper operation based on a count of short-duration resets of the integrated circuit, wherein the short-duration resets correspond to an event in which the integrated circuit was reset and subsequently operated for less than a short reset duration threshold amount of time; and
memory to store a decryption key and the count of short-duration resets.

EXAMPLE EMBODIMENT 18. The system of example embodiment 17, wherein the integrated circuit comprises a programmable logic device and the memory comprises a battery-backed memory.

EXAMPLE EMBODIMENT 19. The system of example embodiment 17, wherein the anti-tamper operation comprises erasing the decryption key.

EXAMPLE EMBODIMENT 20. The system of example embodiment 17, wherein the device manager is to decrypt user-supplied data using the decryption key to obtain the short duration threshold amount of time.

## Claims

1. An integrated circuit device comprising:
memory to store a count of resets of the integrated circuit device having a duration less than a threshold reset duration; and
a device manager to perform an anti-tamper operation when the count of resets exceeds a threshold number of resets.

2. The integrated circuit device of claim 1, wherein the anti-tamper operation comprises erasing a decryption key from the memory.

3. The integrated circuit device of claim 2, wherein the anti-tamper operation comprises storing an indication that the decryption key was erased due to excessive short-duration resets.

4. The integrated circuit device of any one of the preceding claims, wherein the anti-tamper operation comprises applying a delay to a startup time of the integrated circuit device.

5. The integrated circuit device of claim 4, wherein the delay is based on the count of resets.

6. The integrated circuit device of claim 5, wherein the delay increases exponentially based on the count of resets.

7. The integrated circuit device of any one of the preceding claims, wherein the device manager is to, upon reset of the integrated circuit device, increment the count of resets by 1 and, after the threshold reset duration has passed since the reset of the integrated circuit device, decrement the count of resets by 1.

8. The integrated circuit device of any one of the preceding claims, wherein the memory comprises a battery-backed memory to store the count of resets and store a decryption key.

9. The integrated circuit device of claim 8, wherein the device manager is to receive encrypted data indicating the threshold number of resets and decrypt the encrypted data indicating the threshold number of resets using the decryption key stored in the memory.

10. The integrated circuit device of claim 8, wherein the device manager is to receive encrypted data indicating the threshold reset duration, decrypt the encrypted data indicating the threshold reset duration, and maintain the count of resets in the memory based on the threshold reset duration.

11. The integrated circuit device of any one of the preceding claims, wherein the integrated circuit device comprises a programmable logic device.

12. An article of manufacture comprising one or more tangible, machine-readable media storing instructions that, when executed by a device manager of an integrated circuit device, cause the device manager to perform operations comprising:
upon a power-on reset, reading a count of short-duration resets of the integrated circuit device from a memory device indicating a number of times the integrated circuit device operated for less than a threshold reset duration after power-on resets; and
based on the count of short-duration resets exceeding a reset count threshold, performing an anti-tamper operation.

13. The article of manufacture of claim 12, wherein the operations comprise:
incrementing the count of short-duration resets by 1 upon the power-on reset and storing the count of short-duration resets back in the memory; and
after an amount of time corresponding to the threshold reset duration has passed since the power-on reset, decrementing the count of short-duration resets by 1.

14. The article of manufacture of claim 12 or 13, wherein the operations comprise:
reading a decryption key from the memory device; and
decrypting an encrypted bitstream using the decryption key to obtain:
the threshold reset duration;
the reset count threshold; and
the anti-tamper operation.

15. The article of manufacture of any one of claims 12 - 14, wherein the operations comprise:
reading a decryption key from the memory device;
authenticating a token using the decryption key; and
based on the authentication of the token, bypassing the anti-tamper operation.
